# FASCICULE DE BREVET EUROPEEN

(11) **EP 0 406 110 B1**
(45) Date de publication et mention de la délivrance du brevet: **17.03.1993**
(21) Numéro de dépôt: 90401848.8
(22) Date de dépôt: 27.06.1990
(51) Int. Cl.: B60K 17/22, H02K 49/04, F16D 3/40

(54) **Perfectionnements aux transmissions de véhicules équipées de ralentisseurs électriques**
Antriebsübertragung für ein Kfz mit elektromagnetischen Bremsvorrichtungen
Transmission for vehicles with electromagnetic retarders

(30) Priorité: 30.06.1989 FR 8908794
(43) Date de publication de la demande: 02.01.1991
(73) Titulaire: LABAVIA S.G.E., F-78391 Montigny le Bretonneux (FR)
(72) Inventeur: Rugraff, Guy, F-93500 Pantin (FR)
(74) Mandataire: Behaghel, Pierre

(56) Documents cités:
- FR-A- 1 254 364
- FR-A- 2 247 846
- GB-A- 655 168
- US-A- 4 128 147

## Description

L'invention est relative aux transmissions de véhicules, c'est-à-dire aux chaînes d'organes transmettant le mouvement de rotation du moteur aux roues du véhicule, organes comprenant une boîte de vitesses, un pont et un arbre à double cardan assurant le transfert des couples de la boîte au pont tout en permettant leurs déplacements transversaux relatifs.

Elle vise plus particulièrement, parmi ces transmissions, celles équipées d'un ralentisseur électrique à courants de Foucault propre à exercer sur elles un couple de freinage aux instants désirés, ledit ralentisseur comprenant d'une part un stator inducteur annulaire monté en porte-à-faux sur le carter de la boîte de vitesses du véhicule à l'aide d'une ossature appropriée, et d'autre part un rotor comportant deux disques induits en matériau ferromagnétique qui encadrent le stator et sont tous les deux supportés par une pièce elle-même montée en porte-à-faux sur un bout d'arbre intérieur au carter, chaque disque étant à cet effet solidarisé, par l'intermédiaire d'une couronne de bras formant ailettes de ventilation, avec une bague qui est à son tour fixée sur ladite pièce.

Dans les modes de réalisation connus des transmissions du genre en question, la pièce sur laquelle sont montées les deux bagues.est en général un plateau intercalaire spécial qui est fixé, d'une part, sur une "bride de boîte" calée sur un bout d'arbre intérieur au carter de la boîte et, d'autre part, du côté axial opposé audit bout d'arbre, sur une bride terminale du joint à cardan contigu (voir le document US-A-3 496 396).

Il est à noter en effet qu'il n'est pas possible en pratique de monter directement les couronnes rotoriques sur la bride de boîte, car le montage d'au moins la couronne disposée du côté de la boîte devrait alors être effectué avant mise en place de la bride sur la boîte.

Or, cette mise en place est effectuée par un emmanchement axial dur de cannelures complémentaires comprises respectivement par le bout d'arbre intérieur à la boîte et par un manchon cylindrique prolongeant la bride : un tel emmanchement à force ne peut être exécuté qu'avec la bride non chargée.

Le plateau intercalaire spécial doit présenter une certaine épaisseur puisqu'il doit pouvoir transmettre la totalité des couples moteurs du véhicule du cardan à la bride de boîte.

De ce fait, il présente le double inconvénient d'un poids et d'un encombrement axial relativement élevés.

Ce dernier inconvénient peut se révéler sérieux dans le cas des transmissions très courtes, c'est-à-dire pour lesquelles on dispose d'un espace limité entre la sortie de la boîte et l'entrée du pont.

C'est en particulier le cas pour certains autobus modernes à moteur arrière, pour lesquels la longueur hors tout de l'ensemble moteur-boîte et celle du pont arrière, notamment du type hypoïde, augmentent sans que soient modifiés les emplacements respectifs de ces organes.

Dans un tel cas, il est parfois très précieux de pouvoir réduire, même de quelques centimètres seulement, l'allongement de la transmission dû au montage d'un ralentisseur électrique du genre ci-dessus sur elle, la possibilité d'adopter un tel ralentisseur étant parfois directement liée à une telle réduction.

Pour réduire l'allongement indiqué, il a déjà été proposé par la demanderesse (demande de brevet FRANCE n° 89 08045 correspondant à la publication FR-A-2 648 638, publiée le 21.12.1990) d'agrandir transversalement la bride de boîte et de fixer les bagues rotoriques du ralentisseur sur la périphérie de cette bride agrandie par l'intermédiaire d'un intercalaire tubulaire s'étendant axialement à partir de cette périphérie du côté opposé à la boîte.

La bride terminale du joint à cardan concerné est alors directement fixée sur ladite bride de boîte, à l'intérieur dudit intercalaire tubulaire.

Cette construction est intéressante, en particulier du fait que l'intercalaire, n'ayant à transmettre que des couples de ralentissement et non des couples moteurs, peut être constitué par une pièce très légère, comprenant essentiellement un tronçon de tube renforcé par des nervures radiales internes.

Mais elle suppose que l'ouverture dégagée au centre du ralentisseur présente un grand diamètre, cette ouverture devant être suffisante pour recevoir concentriquement l'intercalaire tubulaire et, à l'intérieur de celui-ci, la bride du joint à cardan.

La présente invention propose une solution qui, d'une part, permet de raccourcir encore plus la transmission que la solution précédente et qui, d'autre part, est applicable même aux ralentisseurs pour lesquels le diamètre de l'ouverture centrale est relativement petit, comme c'est le cas pour la plupart des ralentisseurs actuellement existants du genre considéré.

A cet effet, les transmissions du genre en question selon l'invention sont essentiellement caractérisées en ce qu'elles comprennent successivement, entre la bride de boîte et le croisillon de cardan le plus proche, d'abord un intercalaire tubulaire rapporté sur la périphérie de ladite bride de boîte du côté opposé à la boîte et ensuite, rapportée sur ledit intercalaire, une bride de cardan "inversée" par rapport aux brides habituelles, c'est-à-dire disposée du même côté que l'arbre du cardan par rapport au centre du croisillon correspondant et elle-même conformée à cet effet selon un anneau entourant cet arbre, l'assemblage de la bride "inversée" sur l'intercalaire se faisant au niveau de deux collerettes extérieures faisant partie respectivement de ces deux pièces, collerettes appliquées axialement l'une contre l'autre et formant ensemble un anneau sur lequel sont fixées axialement de part et d'autre les deux bagues rotoriques du ralentisseur.

De la sorte le centre du croisillon peut être disposé très près de la face de montage de la bride de boîte, et ce même pour un diamètre relativement petit des bagues rotoriques.

Dans des modes de réalisation préférés, on a recours en outre à l'une et/ou à l'autre des dispositions suivantes :
- le bord intérieur de la collerette extérieure comprise par la bride "inversée" est raccordé à une jupe tubulaire s'étendant du côté opposé à la boîte,
- la bride "inversée" comprend deux oreilles faisant axialement saillie sur cette bride du côté de la boîte et évidées par deux paliers coaxiaux dont l'axe commun est perpendiculaire à celui de ladite bride, paliers propres à recevoir deux tourillons du croisillon concerné, et la zone de révolution correspondant au raccord de la collerette et de la jupe est évidée par deux encoches radiales décalées angulairement de 90° par rapport aux paliers autour de l'axe de la bride, encoches dont les fonds sont délimités par des plages de révolution autour de l'axe desdits paliers,
- l'intercalaire tubulaire est évidé intérieurement par deux encoches radiales décalées angulairement de 90° par rapport aux paliers de la bride "inversée", encoches dont les fonds sont délimités par des plages de révolution autour de l'axe de ces paliers,
- dans un intercalaire selon l'alinéa précédent, les moyens de fixation de cet intercalaire contre la bride de boîte sont des boulons ou pions coopérant avec des alésages qui sont tous rassemblés dans les deux portions, de l'intercalaire, situées angulairement entre ses encoches,
- la bride de boîte est évidée par des alvéoles propres à recevoir la fourche, du joint de cardan concerné, qui est mobile par rapport à cette bride.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre en coupe axiale une partie d'une transmission de véhicule, partie équipée d'un ralentisseur électrique conformément à l'invention. (Il est à noter que les portions coupées des pièces 14, 26 et 23 du bas visibles sur la figure 1 correspondent à des plans axiaux autres que le plan axial vertical médian de la transmission, plans passant respectivement par les axes des alésages 28, 29 et 39 de la figure 2, cette représentation ayant été adoptée pour faire apparaître un goujon 30, un pion dur P et un pion dur 40).

Les figures 2 et 3 montrent à plus grande échelle, respectivement en vue en bout selon la flèche II de la figure 3 et en coupe axiale selon III-III figure 2, un intercalaire tubulaire faisant partie de la transmission ci-dessus, intercalaire établi selon l'invention.

Les figures 4 et 5 montrent à la même échelle que les figures 2 et 3, respectivement en coupe axiale selon IV-IV figure 5, et en vue en bout selon la flèche V de la figure 4, une bride "inversée" faisant partie de la transmission ci-dessus, bride établie selon l'invention.

Le ralentisseur électrique considéré est du type -connu sous la marque "FOCAL"- monté, avec un axe horizontal ou sensiblement horizontal, en porte-à-faux sur la sortie d'un carter de boîte de vitesses 1.

Ce ralentisseur comprend un stator inducteur 2 et un rotor induit 3.

Le stator 2 comprend un flasque de forme sensiblement annulaire 4 qui porte une couronne de bobines 5 en nombre pair agencées de façon à former par leurs extrémités deux suites annulaires de pôles magnétiques plans à polarités alternées de proche en proche.

Le flasque 4 est monté sur le carter de boîte 1 -ou plus précisément sur une monture intermédiaire 6 elle-même rapportée contre la face frontale plane dudit carter 1- par l'intermédiaire d'une structure 7 en forme d'étoile ou de cloche ajourée et de cales tubulaires 8.

Le rotor 3 comprend quant à lui deux disques 9 en matériau ferromagnétique propres à encadrer axialement le stator et à défiler chacun en regard d'une suite de pôles de ce stator dont ils sont séparés par un faible jeu ou entrefer e.

Chaque disque 9 est relié à une bague de fixation 10 par une couronne de bras recourbés 11 formant ailettes de ventilation et les deux bagues 10 sont boulonnées à l'aide de systèmes boulons-écrous 12 sur un anneau intermédiaire 13 sur lequel on reviendra plus loin.

Le problème à résoudre est le montage de cet anneau 13 sur une "bride de boîte" 14 définie comme suit tout en rendant possible l'accouplement sur la même bride de l'un des deux joints à cardan 15 de l'arbre 16 à double cardan, joint placé à l'intérieur dudit anneau 13.

La portion centrale de la monture de boîte 6 présente la forme d'un nez cylindrique 17 portant, par l'intermédiaire d'un roulement terminal 18, un manchon 19 dont l'extrémité axiale extérieure est prolongée radialement par la bride 14 appelée dans le présent texte "bride de boîte".

L'autre extrémité axiale du manchon 19 est cannelée intérieurement en 20 et est emmanchée à force sur l'embout 21 de la boîte, cannelé extérieurement en 22.

Cet emmanchement est réalisé à force pour éviter toute création de jeu et il est ensuite maintenu par vissage axial dans l'embout 21 de vis 53 dont les têtes sont appliquées contre une plaque 54 prenant elle-même appui sur le manchon 19.

Comme indiqué ci-dessus, c'est sur la bride de boîte 14 ainsi définie que l'on se propose de monter l'anneau 13 ci-dessus.

Pour raccourcir au maximum la transmission en raison des impératifs exposés plus haut, les longueurs axiales du nez 17 et du manchon 19 sont relativement petites et la bride 14 s'étend à proximité de l'extrémité axiale dudit nez 17.

De ce fait, et comme les deux couronnes rotoriques 9-12 sont identiques et présentent donc le même encombrement, il n'y aurait pas suffisamment de place dans le creux annulaire de la structure 7 pour y loger la couronne la plus proche de la boîte si l'anneau était confondu avec la périphérie de la bride 14.

Une autre raison pour laquelle une telle solution ne peut être envisagée réside dans les exigences du montage par emmanchement à force, puisque, comme indiqué ci-dessus, il faudrait alors prévoir un montage de la couronne rotorique interne sur la bride avant le montage de cette bride sur la boîte.

C'est pour résoudre ces difficultés que l'on a généralement recours à un plateau intercalaire rapporté extérieurement sur la bride de boîte 14, la périphérie de ce plateau intercalaire constituant alors l'anneau 13, et la bride terminale du joint à cardan 15 étant alors fixée sur ledit plateau intercalaire.

Selon l'invention, on supprime ce plateau intercalaire, particulièrement lourd et encombrant, en remplaçant l'ensemble dudit plateau et de la bride terminale de cardan habituelle par l'ensemble d'un intercalaire tubulaire 23 et d'une bride "inversée" 24.

L'intercalaire tubulaire 23 comprend un manchon cylindrique 25 raccordé à l'une de ses extrémités à une collerette interne 26 et à son autre extrémité à une collerette externe 27.

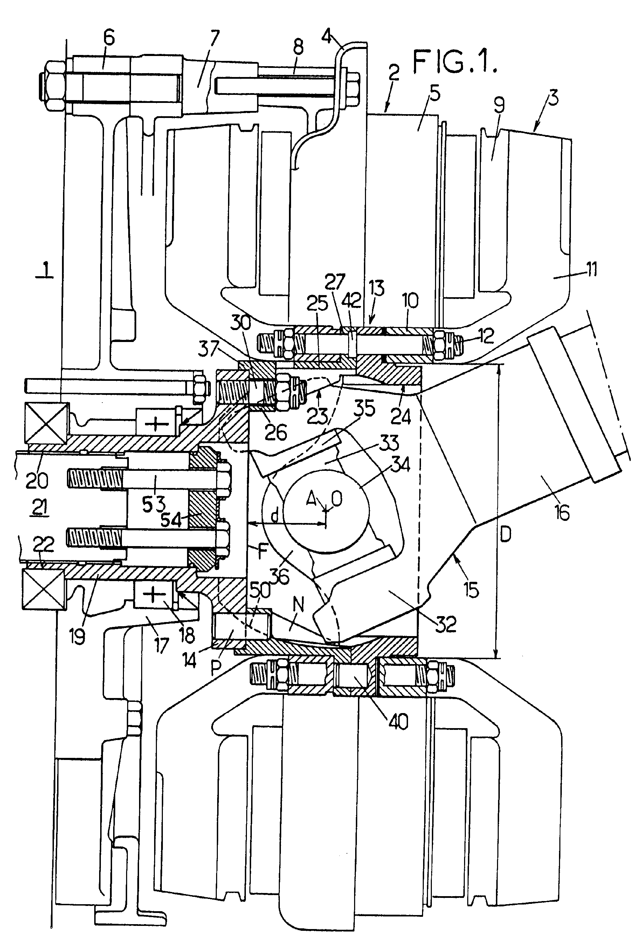

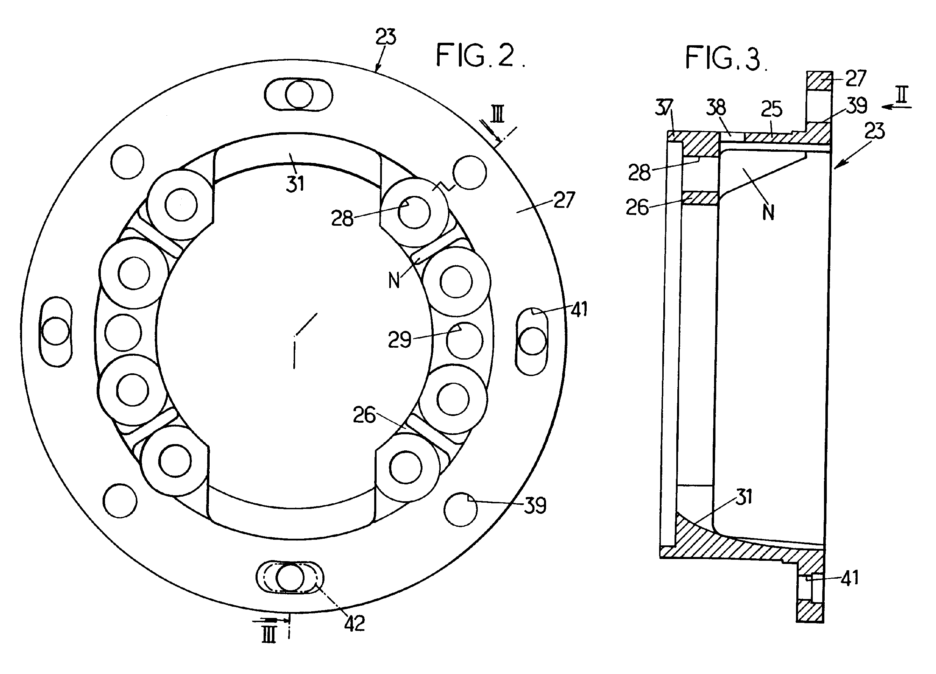

La collerette interne 26 est percée d'alésages cylindriques 28,29 (figure 2) propres à coopérer respectivement avec des goujons filetés 30 (figure 1) ancrés dans la périphérie de la bride de boîte 14 et avec des pions lisses et durs P.

Comme visible sur la figure 2, les alésages en question, au nombre de huit pour les premiers 28 et de deux pour les autres 29, sont regroupés selon deux arcs de cercle diamètralement opposés et s'étendant chacun sur sensiblement 120°, chaque arc comprenant deux paires d'alésages 28 encadrant un alésage 29.

Des nervures N, présentant avantageusement une forme triangulaire comme visible sur la figure 1, sont prévues entre les deux alésages 28 de chaque paire.

Entre les deux arcs indiqués, l'intercalaire tubulaire 23 comprend deux encoches 31 propres à recevoir avec jeu la fourche 32, du joint de cardan 15, qui est mobile par rapport audit intercalaire.

Le joint de cardan 15 en question comprend en effet, d'une façon connue en soi, entre sa bride de fixation -qui est ici la bride inversée 24- et le tronçon d'arbre 16, d'une part, un croisillon 33 portant quatre tourillons 34 et 35 et, d'autre part, deux fourches propres à recevoir chacune de façon pivotante deux tourillons du croisillon dans deux paliers coaxiaux, ces deux fourches 36, 32 étant solidaires respectivement de la bride 24 et du tronçon d'arbre 16.

Les fonds des encoches 31 sont délimités par des plages de révolution autour de l'axe A commun aux deux tourillons 34 portés par la fourche 36.

La portion de plus grand diamètre de la collerette 26 est prolongée du côté de la boîte 1 par un talon annulaire 37 propre à coiffer jointivement la bride de boîte 14 aux fins de centrage relatif.

Des lumières 38 (figure 3) sont évidées radialement dans le manchon cylindrique 25 aux fins de ventilation.

La collerette extérieure 27, quant à elle, constitue une partie de l'anneau 13 ci-dessus.

Elle est évidée par :
- d'une part, des trous cylindriques 39 (fig 2 et 3), notamment au nombre de quatre, propres à recevoir des pions durs 40 aux fins d'accouplement angulaire avec la bride 24,
- et, d'autre part, des trous épaulés 41, notamment au nombre de quatre, propres à être traversés par les systèmes boulons-écrous 12 de montage des couronnes rotoriques et à servir de sièges avec interdiction de rotation pour des "têtes" ou redans 42 non circulaires compris par lesdits systèmes.

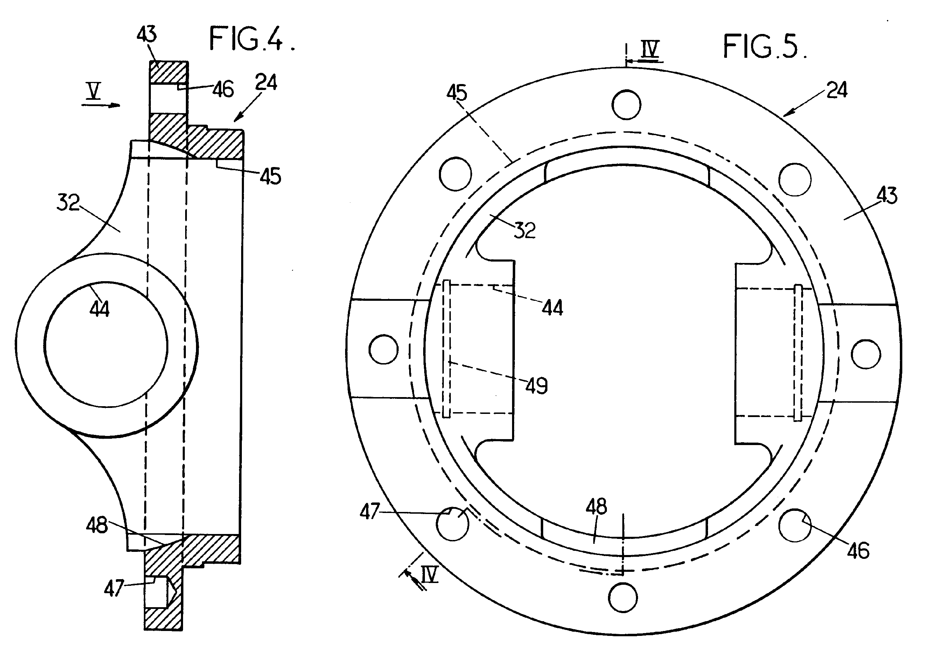

Pour ce qui est de la bride inversée 24, elle comprend :
- une collerette extérieure 43 (fig 4 et 5) propre à former l'anneau 13 par sa juxtaposition avec la collerette 27 ci-dessus,
- deux oreilles faisant saillie axialement sur cette collerette 43 du côté de la boîte 1 et formant les deux ailes de la fourche 32, ailes évidées par des paliers 44 pour les tourillons 34,
- et une jupe cylindrique 45, s'étendant du côté opposé à la boîte 1 à des fins de renforcement mécanique de la bride.

Pour la fixation de la collerette 43 sur la collerette 27, on évide la première, d'une part, par des trous 46 la traversant de part en part et propres à être traversés par les systèmes boulons-écrous 12 et, d'autre part, par des trous borgnes 47 propres à recevoir par emmanchement à force les pions durs 40.

Les trous 46 sont avantageusement au nombre de quatre et il en est de même des trous 47, ces différents trous étant répartis régulièrement tout autour de la collerette concernée 43.

Comme visible sur les figures 4 et 5, la bride inversée 24 comprend, à l'instar de l'intercalaire tubulaire 23, deux encoches radiales 48 pratiquées dans la zone de raccordement entre la collerette 43 et la jupe cylindrique 45, encoches dont les fonds sont destinés à prolonger axialement ceux des encoches 31 de l'intercalaire tubulaire, lesdits fonds étant, encore de révolution autour de l'axe A des deux tourillons 34.

Il est à noter que, l'axe A étant plus proche de la boîte 1 que la collerette 43, les fonds en question des encoches 48 vont en se rétrécissant en direction de la jupe 45 de sorte que ce prolongement définit une ouverture légèrement étranglée pour le logement du joint à cardan 15.

On voit encore sur la figure 5 en 49 des gorges circulaires prévues pour recevoir des bagues de verrouillage, du type circlips, pour les tourillons 34 logés dans les paliers 44.

Chacune des deux pièces annulaires 23 et 24 doit bien entendu être suffisamment résistante mécaniquement pour pouvoir assurer le transfert des couples moteurs entre l'arbre 16 à double cardan et la bride de boîte 14.

Ces pièces sont avantageusement constituées en un acier demi-dur matricé.

De même les pions P et 40 qui assument la part essentielle du transfert des couples entre les différentes pièces accouplées entre elles sont constituées en un matériau très résistant tel qu'un acier dur.

Comme visible sur la figure 1, il est avantageux en outre de prévoir dans la bride de boîte 14 elle-même des alvéoles 50 qui sont disposés dans le prolongement axial des encoches 31 de l'intercalaire 23 et qui permettent, comme ces dernières, de recevoir avec jeu les bras de la fourche 32 lorsque l'inclinaison de l'axe de l'arbre 16 par rapport à celui de ladite bride de boîte est élevé.

Les fonds des portions extérieures de ces alvéoles 50 sont encore de révolution autour de l'axe A des tourillons 34.

En suite de quoi et quel que soit le mode de réalisation adopté, on dispose finalement d'une transmission de véhicule équipée d'un ralentisseur électrique du type FOCAL, dont la construction résulte suffisamment de ce qui précède.

Cette transmission présente le double avantage :
- d'être extrêmement courte, la distance axiale d entre le centre 0 du croisillon 33 et la face frontale F d'application de l'intercalaire tubulaire 23 sur la bride de boîte 14 pouvant être aussi petite que 47 mm pour un ralentisseur électrique dont le diamètre extérieur est de l'ordre de 500 mm,
- et de pouvoir être utilisée avec un ralentisseur électrique d'un type actuellement existant, c'est-à-dire présentant une ouverture centrale relativement étroite, le diamètre intérieur D de ses bagues rotoriques 10 pouvant être aussi petit que 180 mm.

On notera également le très petit nombre des organes de fixation requis.

Ce sont en effet les systèmes boulons-écrous 12 habituellement prévus pour fixer les deux bagues rotoriques 10 sur l'anneau 13 qui sont ici utilisés en outre pour assembler l'une contre l'autre les deux pièces 23 et 24 : certes on prévoit en plus des pions 40 pour assurer le transfert des couples entre ces deux pièces, mais aucun système de vissage supplémentaire n'est requis pour leur assemblage mutuel, et l'on peut considérer qu'en définitive la construction proposée comprend par exemple moins d'organes de vissage que celle évoquée ci-dessus pour laquelle les bagues rotoriques sont fixées sur un intercalaire tubulaire lui-même rapporté sur la périphérie agrandie de la bride de boîte et pour laquelle le joint à cardan comprend une bride terminale normale directement fixée sur ladite bride de boîte.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Transmission de véhicule comprenant une boîte de vitesses (1), un pont, un arbre à double cardan (16) interposé entre ces deux organes et un ralentisseur électrique à courants de Foucault comportant d'une part un stator inducteur annulaire (2) monté en porte-à-faux sur le carter de la boîte de vitesses à l'aide d'une ossature appropriée (7), et d'autre part un rotor (3) comportant deux disques induits (9) en matériau ferromagnétique qui encadrent le stator et sont tous les deux supportés par une bride de boîte (14) elle-même emmanchée en porte-à-faux sur un bout d'arbre (19) intérieur au carter, chaque disque étant à cet effet solidarisé, par l'intermédiaire d'une couronne de bras (11) formant ailettes de ventilation, avec une bague (10) qui est à son tour fixée sur ladite bride, caractérisée en ce qu'elle comprend en outre, entre la bride de boîte (14) et le croisillon (33) de cardan le plus proche, d'abord un intercalaire tubulaire (23) rapporté sur la périphérie de ladite bride de boîte du côté opposé à la boîte et ensuite, rapportée sur ledit intercalaire, une bride de cardan (24) "inversée" par rapport aux brides habituelles, c'est-à-dire disposée du même côté que l'arbre (16) du cardan par rapport au centre (0) du croisillon correspondant et elle-même conformée à cet effet selon un anneau entourant cet arbre, l'assemblage de la bride "inversée" (24) sur l'intercalaire (23) se faisant au niveau de deux collerettes extérieures (27, 43) faisant partie respectivement de ces deux pièces, collerettes appliquées axialement l'une contre l'autre et formant ensemble un anneau (13) sur lequel sont fixées axialement de part et d'autre les deux bagues rotoriques (10) du ralentisseur.

2. Transmission selon la revendication 1, caractérisée en ce que le bord intérieur de la collerette extérieure (43) comprise par la bride "inversée" (24) est raccordé à une jupe tubulaire (45) s'étendant du côté opposé à la boîte.

3. Transmission selon la revendication 2, caractérisée en ce que la bride "inversée" (24) comprend deux oreilles (36) faisant axialement saillie sur cette bride du côté de la boîte et évidées par deux paliers coaxiaux dont l'axe commun (A) est perpendiculaire à celui de ladite bride, paliers propres à recevoir deux tourillons (34) du croisillon concerné (33), et en ce que la zone de révolution correspondant au raccord de la collerette (43) et de la jupe (45) est évidée par deux encoches radiales (48) décalées angulairement de 90° par rapport aux paliers autour de l'axe de la bride, encoches dont les fonds sont délimités par des plages de révolution autour de l'axe (A) desdits paliers.

4. Transmission selon l'une quelconque des précédentes revendications, caractérisée en ce que l'intercalaire tubulaire (23) est évidé intérieurement par deux encoches radiales (31) décalées angulairement de 90° par rapport aux paliers (34) de la bride "inversée , encoches dont les fonds sont délimités par des plages de révolution autour de l'axe (A) de ces paliers.

5. Transmission selon la revendication 4, caractérisée en ce que les moyens de fixation de l'intercalaire (23) contre la bride de boîte (14) sont des boulons (30) ou pions (P) coopérant avec des alésages (28, 29) qui sont tous rassemblés dans les deux portions, de l'intercalaire, situées angulairement entre ses encoches (31).

6. Transmission selon l'une quelconque des précédentes revendications, caractérisée en ce que la bride de boîte (14) est évidée par des alvéoles (50) propres à recevoir la fourche (32), du joint de cardan concerné (45), qui est mobile par rapport à cette bride.

## Patentansprüche

1. Antriebsübertragung für ein Kraftfahrzeug mit einem Getriebe (1), einer Achse, einer Welle (16) mit Doppelkardangelenk, die zwischen den beiden Teilen eingefügt ist und einer Wirbelstrombremse, die einerseits aus einem ringförmigen Statorinduktor (2), der fliegend an dem Getriebegehäuse mittels eines geeigneten Gestänges (7) befestigt ist, und andererseits aus einem Rotor (3) besteht, der zwei Induktionsscheiben (9) aus ferromagnetischem Material enthält, die den Stator einrahmen und die beide an einem Getriebeflansch (14) abgestützt sind, der selbst fliegend an einem Wellenzapfen (19) im Inneren des Gehäuses angebracht ist, wobei jede Scheibe zu diesem Zweck über einen Armkranz (11), der Lüfterflügel bildet, mit einem Ring (10) fest verbunden ist, der seinerseits an dem Getriebeflansch befestigt ist, dadurch gekennzeichnet, daß die Antriebsübertragung darüber hinaus zwischen dem Getriebeflansch (14) und dem Kardankreuz (33) des am nächsten gelegenen Kardangelenkes zunächst ein rohrförmiges Zwischenstück (23), das am Umfang des Getriebeflansches auf der entgegengesetzten Seite des Getriebes angestückt ist und ferner, eine an das Zwischenstück angefügte Halterung (24) für das Kardangelenk enthält, die in bezug auf die üblichen Befestigungen "umgekehrt", d. h. bezogen auf den Mittelpunkt (0) des entsprechenden Kardankreuzes auf der gleichen Seite angeordnet ist wie die Kardanwelle (16) und die ihrerseits zu diesem Zweck als Ring ausgebildet ist, der die Welle umgibt, wobei die Anbringung der umgekehrt angeordneten Kardanhalterung (24) an dem Zwischenstück (23), im Bereich zweier äußerer Flansche (27, 43) erfolgt, die jeweils Teil dieser beiden Werkstücke sind und die Flansche axial gegeneinander gedrückt werden und gemeinsam einen Ring (13) bilden, an dem axial auf beiden Seiten die beiden Rotorringe (10) der Wirbelstrombremse angeordnet sind.

2. Antriebsübertragung nach Anspruch 1, dadurch gekennzeichnet, daß der Innenrand des äußeren Flansches (43), der "umgekehrt" angeordneten Halterung (24) mit einem rohrförmigen Mantel (45) verbunden ist, der sich auf der dem Getriebe entgegengesetzten Seite erstreckt.

3. Antriebsübertragung nach Anspruch 2, dadurch gekennzeichnet, daß die "umgekehrte" Halterung (24) zwei Ansätze (36) enthält, die axial an der Halterung auf der Seite des Getriebes vorstehen und in denen zwei koaxiale Lager ausgenommen sind, deren gemeinsame Achse (A) senkrecht zu der der Halterung verläuft, wobei die Lager zwei Zapfen (34) des betreffenden Kardankreuzes (33) aufnehmen können und daß die Umdrehungszone im Bereich des Übergangs des Flansches (43) in den Mantel (45) mit zwei radialen Ausnehmungen (48) versehen ist, die bezogen auf die beiden Lager, in einem Winkel von 90° versetzt um die Achse des Getriebes verlaufen und deren Böden durch Umdrehungsflächen um die Achse (A) der Lager begrenzt werden.

4. Antriebsübertragung nach einem der vorhergehenden Ansprüche, dadurch gekennzeichnet, daß das rohrförmige Zwischenstück (23) innen mit zwei radialen Ausnehmungen (31) versehen ist, die bezogen auf Lager (34) der umgekehrten Halterung in einem Winkel von 90° versetzt verlaufen, wobei die Böden der Einschnitte durch Umdrehungsflächen um die Achse (A) dieser Lager begrenzt werden.

5. Antriebsübertragung nach Anspruch 4, dadurch gekennzeichnet, daß die Einrichtungen zur Befestigung des Zwischenstückes (23) gegenüber dem Getriebeflansch (14) aus Bolzen (30) oder Paßstifte (P) bestehen, die mit Bohrungen (28, 29) zusammenwirken, die in den beiden Abschnitten des Zwischenstückes vorgesehen sind, die winklig zwischen dessen Ausnehmungen (31) liegen.

6. Antriebsübertragung nach einem der vorhergehenden Ansprüche, dadurch gekennzeichnet, daß der Getriebeflansch (14) mit Auskehlungen (50) versehen ist, die die Gabel (32) des betreffenden Kardangelenkes (15) aufnehmen können, das in bezug auf die Halterung beweglich ist.

## Claims

1. Vehicle transmission comprising a gearbox (1), a rear axle, a double cardan shaft (16) interposed between these two members and an electric eddy current retarder comprising on the one hand an annular inductor stator (2) cantilevered on the casing of the gearbox by means of an appropriate frame (7) and on the other hand a rotor (3) comprising two induced ferromagnetic material discs (9) which surround the stator and are both supported by a gearbox flange (14) itself cantilevered on a stub shaft (19) inside the casing, each disc being fixed for this, via a crown of arms (11) forming ventilation fins, to a ring (10) which is in its turn fixed to said flange, characterized in that it further comprises, between the gearbox flange (14) and the nearest journal cross (33) of the cardan joint, first of all a tubular insert (23) fixed to the periphery of said gearbox flange on the side opposite the gearbox and then, fixed to said insert, a cardan flange (24) which is "reversed" with respect to the usual flanges, namely disposed on the same side as the shaft (16) of the cardan joint with respect to the centre (0) of the corresponding journal cross and itself formed for this purpose as an annulus surrounding this shaft, the assembly of the "reversed" flange (24) on the insert (23) being made at the level of two external collars (27, 43) forming part respectively of these two parts, which collars are applied axially against each other and form together an annulus (13) on which the two rotor rings (10) of the retarder are fixed axially on each side.

2. Transmission according to claim 1, characterized in that the inner edge of the external collar (43) comprised by the "reversed" flange (24) is connected to a tubular skirt (45) extending on the side opposite the gearbox.

3. Transmission according to claim 2, characterized in that the "reversed" flange (24) comprises two lugs (36) projecting axially from this flange on the same side as the gearbox and formed with two coaxial bearings whose common axis (A) is perpendicular to that of said flange, which bearings are adapted for receiving two journals (34) of the journal cross concerned (33), and in that the zone of revolution corresponding to the connection of the collar (43) and of the skirt (45) is formed with two radial recesses (48) offset angularly by 90° with respect to the bearings about the axis of the flange, which recesses have bottoms defined by zones of revolution about the axis (A) of said bearings.

4. Transmission according to any one of the preceding claims, characterized in that the tubular insert (23) is formed inwardly with two radial recesses (31) offset angularly by 90° with respect to the bearings (34) of the "reversed" flange, which recesses have bottoms defined by zones of revolution about the axis (A) of these bearings.

5. Transmission according to claim 4, characterized in that the means for fixing the insert (23) against the gearbox flange (14) are bolts (30) or pins (P) cooperating with bores (28, 29) which are all assembled together in the two portions of the insert situated angularly between its recesses (31).

6. Transmission according to any one of the preceding claims, characterized in that the gearbox flange (14) is formed with cavities (50) adapted for receiving the fork (32), of the cardan joint concerned (45), which is movable with respect to this flange.
